Europäisches Patentamt

(19) European Patent Office

Office européen des brevets

(11) Publication number: **0 180 262**
A2

# (12) EUROPEAN PATENT APPLICATION

(21) Application number: **85201553.6**

(22) Date of filing: **26.09.85**

(51) Int. Cl.⁴: **C 08 F 2/10,** C 08 F 20/18, C 02 F 1/56

(30) Priority: **26.10.84 GB 8427148**

(43) Date of publication of application: **07.05.86**
**Bulletin 86/19**

(84) Designated Contracting States: **BE DE FR GB IT NL**

(71) Applicant: **SHELL INTERNATIONALE RESEARCH MAATSCHAPPIJ B.V., Carel van Bylandtlaan 30, NL-2596 HR Den Haag (NL)**

(72) Inventor: **Graafland, Teunis, Badhuisweg 3, NL-1031 CM Amsterdam (NL)**

(74) Representative: **Aalbers, Onno et al, P.O. Box 302, NL-2501 CH The Hague (NL)**

(54) **A process for the preparation of water soluble vinyl saccharide polymers.**

(57) This invention provides a process for the preparation of water-soluble vinyl saccharide polymers by polymerisation of at least one water-soluble monovinyl saccharide monomer in water at a temperature in the range of from 10 °C to 90 °C, characterized in that the polymerisation is carried out in the presence of an azo-type free-radical initiator and that the concentration of water-soluble monovinyl saccharide monomer in water is not higher than 150 kg/m³. The polymers prepared according to the invention may advantageously be used for EOR and for water treatment.

ACTORUM AG

A PROCESS FOR THE PREPARATION OF WATER SOLUBLE
VINYL SACCHARIDE POLYMERS

This invention relates to a process for the preparation of water-soluble vinyl saccharide polymers which can be used e.g. as polymeric thickeners or as water treating agents.

In "Entwicklung neuer Polymertypen zur Tertiärförderung von Erdöl", – Forschungsbericht 165-2 (1982) of the Deutsche Gesellschaft für Mineralölwissenschaft und Kohlenchemie – a survey is given on the preparation and performance of water-soluble vinyl saccharide polymers, including those which would result in aqueous solutions having higher viscosities than obtained sofar with such polymers. For both options which are available for the preparation of such polymers, i.e. polymerisation in an organic solvent in the presence of a free-radical initiator of a vinyl ester of a monosaccharide of which the pending hydroxyl groups have been protected, followed by treatment with acid to liberate the hydroxyl groups to render the polymer water-soluble or, alternatively, by polymerisation in water of a water-soluble vinyl ester of a monosaccharide in the presence of hydrogen peroxide, potassium persulphate or ammonium persulphate as free-radical initiator, it is concluded that it was not possible to produce water-soluble polymers which as a 1 %w solution in water had a viscosity higher than 2.0 Pa.s at 25°C.

Surprisingly, it has now been found possible to prepare water-soluble vinyl saccharide polymers, which result in aqueous solutions having considerably higher viscosities compared to similar solutions based on the water-soluble vinyl saccharide polymers prepared hitherto.

Accordingly, the invention provides a process for the preparation of water-soluble vinyl saccharide polymers by polymerisation in water of at least one water soluble monovinyl saccharide monomer at a temperature in the range of from 10°C to 90°C, characterized in that the polymerisation is carried out in the presence of an azo-type free-radical initiator and that the concentration of water-soluble monovinyl saccharide monomer in water is not higher than 150 kg/m$^3$.

Suitable such organic azo-compounds which can be used to initiate free-radical polymerisation include azonitriles such as 2,2'-azobisisobutyronitrile (AIBN), 2,2'-azobis(2,4-dimethylvaleronitrile), 2,2'-azobis(2,3,3-trimethylvaleronitrile), 2,2'-azobis-(2,4,4-trimethylvaleronitrile), 2,2'-azobis(2-cyclopropylpropionitrile), 1,1'-azobis(cyclohexane-1-carbonitrile), 2,2'-azobis(2,4-dimethyl-4-methoxyvaleronitrile), 2-t-butyl-azo-2,4,4-trimethyl-valeronitrile, 2-λ-naphthylazoisobutyronitrile and 4,4'-dicyano-4,4'-azovaleric acid, but also azo-compounds such as 2,2'-azobis-(methyl isobutyrate), etc. and alkyl, aryl and cyclic azo-compounds such as 1,1'-azobis(1-phenylethane) or halogenated derivatives thereof such as 1,1'-azobis(1-phenyl-1-chloroethane).

These azo compounds can be used alone or as mixtures thereof.

Preferred are those azonitrile-compounds, which decompose in the temperature range at which the polymerisation process is conducted. Most preferred is AIBN.

Monomers which may conveniently be used in the preparation of water-soluble vinyl saccharide polymers are water soluble mono- or di-saccharide compounds containing one polymerisable vinyl group. This polymerisable vinyl group may be a vinyloxy or a vinylcarbonyloxy group. Suitable such vinyloxy group-containing monosaccharide compounds include:
3-O-vinyl-D-glucose, 6-vinyl-D-galactose and 1-O-vinyl-L-sorbose.

The group of polymerisable monosaccharide compounds bearing a vinylcarbonyloxy group include compounds such as 3-O-acryloyl-D-glucose, 3-O-methacryoyl-D-glucose, 6-O-acryloyl-D-galactose, 6-O-methacryloyl-D-galactose, 1-O-acryloyl-L-sorbose, 1-O-methacryl-oyl-L-sorbose, 1-O-acryloyl-mannose and 1-O-methacryloyl-mannose.

Methods for the preparation of the polymerisable water-soluble vinyloxy group containing monosaccharides have been disclosed by e.g. Reppe et al in Annalen, 1956, 601, 81 and Watanabe and Colon in J. Amer. Chem. Soc. 1957, 79, 2828. A method for the preparation of the polymerisable water soluble vinylcarbonyloxy group containing monosaccharides has been disclosed by Black et al, Makromol. Chem. 117 (1968), 210.

Although the preparation of these water soluble vinyl saccharide polymers can be carried out with both the vinyloxy- and vinylcarbonyloxy-containing saccharide monomers, there is a preference for using the vinylcarbonyloxy type of saccharide monomers, because it is known that it is more difficult to prepare high molecular weight polymers when employing the vinyloxy type of saccharide monomer. Within the group of water-soluble vinylcarbonyloxy type of saccharide monomer there is a preference for using the mono-saccharide esters of methacrylic acid as it can be expected that they will result in water-soluble polymers which generally are hydrolytically somewhat more stable than the corresponding acrylic acid based products.

The above monomers all have in common that their polymerisation will result in a water-soluble vinyl saccharide polymer having a non-ionic character. However, the present invention is not restricted to the preparation of non-ionic type of water-soluble saccharide polymers, but can also be affected to provide water-soluble polyvinyl saccharide polymers having an ionic character. This may be effected by carrying out the polymerisation of water-soluble e.g. monosaccharide monomer in the presence of at least one water-soluble polymerisable compound bearing an ionic group e.g. a carboxy or sulfo $(HO.SO_2-)$ group. Suitable such ionic water-soluble monomers include acrylic acid, methacrylic acid, maleic acid, itaconic acid (also referred to as "methylene succinic acid") or 3-O-methacryloyl-D-gluconic acid. Methacrylic acid is the preferred ionic water-soluble monomer. The amount of ionic type of water-soluble monomer which may be copolymerised is not critical and may vary over a wide range and will to a large extent be governed by the requirements of the ultimate polymer.

The preparation of the water-soluble vinyl saccharide polymers can be effected by any of the known polymerisation processes such as batchwise polymerisation, via a steady state process, via a programmed addition etc. In view of the relatively small scale on which the experiments for the present invention have been carried out, a batchwise polymerisation was considered to be very suitable but should not be interpreted to be a limitation of the process. When conducting experiments on a very much larger scale it is conceivable that an alternative polymerisation routine may be preferred. With the batchwise mode of polymerisation the aqueous monomer solution and the initiator are introduced into the reactor before commencing the reaction, which reaction is preferably carried out in a nitrogen atmosphere. As it is the intention to produce high molecular weight polymers it can be expected that the viscosity in the reactor towards the end of the reaction will be extremely high, hence the starting concentration of monomer in water should not exceed 150 kg/m$^3$ and more preferably not exceed 100 kg/m$^3$. Moreover, too high a monomer concentration may result in gel formation.

As the azo-type free-radical initiators, which may conveniently be used in the process of the present invention, are generally not or only partly soluble in water, it has been found beneficial to introduce these azo compounds into the reactor, especially when insoluble in water, as a solution in a water-miscible organic solvent e.g. acetone. The amount of free-radical initiator to be used for the process of the invention may vary over wide ranges, but with a process wherein high molecular weight polymers are to be made there should be a maximum to the amount which may be used. Hence, the molar ratio of monosaccharide monomer plus comonomer azo-type of free-radical initiator is preferably at least 100:1, and more preferably at least 500:1. As the objective of the present invention is to prepare water-soluble vinyl saccharide polymers which will result in aqueous solutions having a high solution viscosity, it is necessary for the molecular weight of said polymer to be as high as possible. It will generally be understood that the temperature at which the polymerisation reaction is to be conducted· should not be too high. Hence the process of the present invention may conveniently be carried out at a temperature in the range of from 10°C to 90°C and more preferably in the range of from 20°C to 70°C and most preferably at a temperature in the range of from 25°C to 60°C. It will be understood by those skilled in the art that selecting the required polymerisation parameters is quite often a compromise between product performance, yield, reaction time and temperature.

At the end of the polymerisation reaction the ultimate polymer may be isolated from any unreacted monomer etc. by pouring the reactor contents in an excess of e.g. ethanol, whereupon the polymer is precipitated. Upon drying the precipitate, a white water-soluble cake is obtained. In the event of the polymer being a copolymer of at least one water-soluble saccharide monomer and at least one water-soluble carboxy group-bearing monomer, the dried polymer is dissolved in a large excess of water and subsequently the carboxy groups neutralised with an aqueous solution of an alkali metal hydroxide or ammonium hydroxide, which neutralisation reaction will result, depending on the carboxylic acid content of the water-soluble polymer, in a considerable increase in the viscosity of the solution.

The non-ionic type of water-soluble vinyl saccharide polymers prepared by the process of this invention may conveniently be used as polymeric thickeners and provide aqueous solutions having a high solution viscosity at low polymer concentration, which solution viscosity is more or less independent on the salinity of said solution. Hence these polymers are eminently suitable for use in the enhanced oil recovery where the salinity of formation water frequently has an adverse effect on the viscosity of aqueous solution used. Although the viscosity of aqueous solution based on the ionic type of vinyl saccharide polymers may be very much higher compared to that of similar solutions based on comparable non-ionic type of vinyl saccharide polymers - i.e. those prepared under the same polymerisation conditions - this can only be realised with salinity free or low salinity solutions. An increase in the salinity of the solution may well result in a considerable decrease in the viscosity of the solution. Hence these ionic type of polymers may advantageously be employed in applications where salinity-free or low salinity water is present e.g. for EOR in low salinity reservoirs or for water treatment.

The invention will be further understood from the following examples wherein the following terms have been defined as follows:

AIBN: 2,2'-azobisisobutyronitrile

ABCP: 4,4'-dicyano-4,4'-azovaleric acid

APS: ammonium persulphate

$H_2O_2$: hydrogen peroxide

BPO: benzoyl peroxide

MG: 3-0-methacryloyl-D-glucose

MA: methacrylic acid

poly MG/MA: copolymer of MG and MA.

The polymers obtained have been characterised by the viscosity at 20°C of the aqueous solutions containing 0.1 or 1.0 %w of polymer. The viscosity measurements were conducted using a Brookfield viscometer equipped with an UL-adapter and the resulting values expressed as mPa.s.

Preparation of 3-0-methacryloyl-D-glucose (MG).

4 g of 1.2:5.6-di-0-isopropylidene-3-0-methacryloyl-D-glucose (DIMG), 25 mg of p-methoxyphenol and 30 ml 0.5 N HCl were introduced into a 100 ml glass reactor equipped with a glass stirrer, a thermometer and a reflux condensor, and subsequently the reactor was placed in an thermostated oil-bath. The reactor contents were heated to 70°C with continuous stirring, and maintained at this temperature until the contents had become homogeneous (1-2 h). After cooling to roomtemperature the reactor contents were transferred to a separatory funnel. To remove the p-methoxyphenol, the 3-0-methacryloyl-D-glucose solution was treated with 50 ml diethyl ether and after phase separation had occurred the organic phase was removed. This extraction procedure was repeated four times. Subsequently the aqueous solution was transferred to the above-mentioned 100 ml glass reactor and a pressure slightly below atmospheric was applied to remove the last traces of diethyl ether. Finally the solution was neutralised to a pH of 7 with 1.0 N NaOH, which procedure was carefully monitored by pH measurement. A solids determination indicated that the MG content of the aqueous solution was 6.2 %w (= 0.25 mol/l).

Examples I-V

Preparation of poly-MG at 40 and 70°C employing AIBN as the free-radical initiator in different MG: AIBN molar ratio's.

50 ml of MG solution (0.25 mol/l) prepared as described hereinbefore was introduced into a 100 ml glass reactor as described hereinbefore and flushed with $N_2$ to remove any oxygen. Subsequently 250 ml acetone containing so much AIBN was introduced so as to arrive at the MG/AIBN molar ratio's as indicated in Table I. The reactor contents were heated with the aid of a thermostated oil-bath to 40 or 70°C and with moderate stirring and a slight $N_2$ purge maintained at this temperature for 48 hours. Upon termination of the polymerisation reaction the reactor contents were cooled to room temperature and poured out under continuous stirring in approximately 150 ml ethyl alcohol whereupon the poly-MG was precipitated. After removing the liquid phase the residue was dried under sub-atmospheric pressure at 50°C to a constant weight. The ultimate products were white, water-soluble powders. The viscosities of the different aqueous solutions prepared from these poly-MG polymers are given in Table I; these solutions contained 0.1% by weight of sodium chloride.

TABLE I

| Example | MG/AIBN molar ratio | Polymerisation temperature (°C) | | |
| | | 40 | | 70 |
| | | Polymer concentration (%w) | | |
| | | 0.1 | 1.0 | 1.0 |
| I | 100:1 | − | < 2 | < 2 |
| II | 500:1 | 2.0 | 240 | 2.7 |
| III | 1000:1 | 5.2 | 293 | 4.0 |
| IV | 2500:1 | 2.5 | 446 | 5.9 |
| V | 10000:1 | − | − | 12.8 |

Examples VI-IX

Preparation of poly-MG at different polymerisation temperatures employing AIBN and ABCP, respectively, at a MG/initiator molar ratio of 1000:1.

50 ml of a MG solution (0.25 mol/l) prepared as described hereinbefore was introduced into a 100 ml glass reactor as described hereinbefore and flushed with $N_2$ to remove any oxygen. Subsequently 250 ml of an aqueous ABCP solution or 250 ml of an acetone solution of AIBN were introduced - both solutions containing so much free-radical initiator to arrive at a MG/initiator molar ratio of 1000:1. With the aid of a thermostated oilbath the reactor contents were heated to the temperature indicated in Table II and with moderate stirring and a slight $N_2$ purge maintained at this temperature for 48 hours. From hereon the procedure was identical to the one described in Examples I-V. The viscosities of the aqueous solutions prepared from these MG polymers are given in Table II.

TABLE II

| Example | Polymerisation temperature, °C | Initiator | |
| | | AIBN | ABCP |
| --- | --- | --- | --- |
| VI | 85 | 3.1 | 3.4 |
| VII | 65 | 4.7 | 3.6 |
| VIII | 55 | 28.4 | - |
| IX | 40 | 293 | 12.1 |

Comparative Experiments A-D.

Preparation of poly MG at different polymerisation temperatures employing APS, $H_2O_2$ and BPO, respectively, at a MG/initiator molar ratio of 1000:1.

These experiments were carried out according to the procedure described in Examples VI-IX and wherein the APS and $H_2O_2$ were added to the reactor contents as aqueous solutions containing 1 g initiator/l and the BPO was added as a solution in 250 ml acetone. The viscosities of the aqueous solutions prepared from these MG-polymers are given in Table III.

TABLE III

| Comparative Experiments | Polymerisation temperature, °C | Initiator | | |
|---|---|---|---|---|
| | | APS | $H_2O_2$ | BPO |
| A | 85 | 2.7 | 5.1 | 3.0 |
| B | 65 | 2.0 | 2.7 | 2.3 |
| C | 55 | 2.3 | 5.8 | 3.1 |
| D | 40 | 4.0 | - | 5.1 |

Examples X-XII

Preparation of MG/MA copolymers.

Aqueous solutions of MG prepared as described hereinbefore were mixed with aqueous MA solutions (0.25 mol MA/l) to arrive at solutions having a MG/MA molar ratio of 9:1, 6:4 and 3:7, respectively. 50 Ml of the thus obtained solutions were introduced into a 100 ml glass reactor as described hereinbefore and flushed with $N_2$ to remove any oxygen. Subsequently 250 ml of an acetone solution of AIBN containing so much AIBN to arrive at a monomer/ AIBN molar ratio of 2500:1 was introduced into each of the solutions. With the aid of a thermostated oilbath the reactor contents were heated to 40°C with moderate stirring and a slight $N_2$ purge and maintained at this temperature for 48 hours. Upon termination of the polymerisation the reactor contents were cooled to room temperature and poured out under continuous stirring in approximately 150 ml ethyl alcohol, whereupon the MG/MA copolymer was precipitated. After drying the MG/MA copolymer was dissolved in 250 ml water and the carboxylic acid groups where carefully neutralised employing an aqueous 1 N NaOH solution. Subsequently the resulting solutions were poured out in 200 ml ethyl alcohol and the obtained precipitate was dried under sub-atmospheric pressure at 50°C to constant weight. Aqueous solutions were prepared containing 1000 ppm of the respective neutralised MG/MA copolymers and the viscosity of the obtained solutions was determined. Viscosity measurements were also conducted after increasing amounts of NaCl had been added to said solutions to arrive at solutions having NaCl contents as indicated in Table IV. This table also includes the viscosities of aqueous solutions containing 10000 ppm of MG polymer of Example IV - and measured at different NaCl contents.

TABLE IV

| Example | X | XI | XII | IV |
|---|---|---|---|---|
| MG/MA molar ratio | 9:1 | 6:4 | 3:7 | poly MG |
| Polymer concentration %w | 0.1 | 0.1 | 0.1 | 1.0 |
| NaCl concentration %w | | | | |
| 0 | >100 | 44.7 | 93 | 582 |
| 0.1 | 8.4 | 11.6 | 7.1 | 446 |
| 1.0 | 4.0 | 3.6 | 3.0 | 397 |
| 3.0 | 2.8 | 2.0 | 2.3 | 443 |
| 10.0 | - | - | - | 555 |

K 588

## C L A I M S

1.      A process for the preparation of water-soluble vinyl saccharide polymers by polymerisation in water of at least one water-soluble monovinyl saccharide monomer at a temperature in the range of from 10°C to 90°C, characterized in that the polymerisation is carried out in the presence of an azo-type free-radical initiator and that the concentration of water-soluble monovinyl saccharide monomer in water is not higher than 150 kg/m$^3$.

2.      A process according to claim 1, characterized in that the azo-type free-radical initiator is an azonitrile compound.

3.      A process according to claim 2, characterized in that the azonitrile compound is 2,2'-azobisisobutyronitrile.

4.      A process according to any one of the preceding claims, characterized in that the concentration of the water-soluble monovinyl saccharide monomer in water does not exceed 100 kg/m$^3$.

5.      A process according to any one of the preceding claims, characterized in that the monovinyl saccharide monomer is a mono-methacryloyl and/or a mono-acryloyl saccharide monomer.

6.      A process according to claim 5, characterized in that the monomer is 3-O-methacryloyl-D-glucose.

7.      A process according to any one of the preceding claims, characterized in that at least one water-soluble $\alpha,\beta$ olefinically unsaturated mono- or dicarboxylic acid is copolymerised.

8.      A process according to claim 7, characterized in that the water-soluble $\alpha,\beta$ olefinically unsaturated mono- or dicarboxylic acid is methacrylic acid.

9.      A process according to any one of the preceding claims, characterized in that the molar ratio of water-soluble monomer to azo-type free-radical initiator is at least 100:1.

10.      A process according to claim 9, characterized in that the molar ratio of water-soluble monomer to azo-type free-radical initiator is at least 500:1.

11.    A process according to any one of the preceding claims, characterized in that the polymerisation is carried out at a temperature in the range of from 20°C to 70°C.

12.    A process according to claim 1, substantially as hereinbefore described with reference to any one of the Examples I to XII.

13.    A water-soluble polyvinyl saccharide polymer whenever prepared by means of a process according to any one of the preceding claims.